# EUROPEAN PATENT APPLICATION

(11) **EP 4 838 548 A1**
(43) Date of publication of application: **11.11.2026**
(21) Application number: 26158159.9
(22) Date of filing: 12.02.2026
(51) Int. Cl.: H01G 4/005, H01G 4/008, H01G 4/30

(54) **MULTILAYER CERAMIC CAPACITOR HAVING NICKEL GERMANIUM INTERNAL ELECTRODES AND METHOD OF MANUFACTURING THE SAME**

(30) Priority: 08.05.2025 KR 20250059765
(71) Applicant: Samsung Electro-Mechanics Co., Ltd., Suwon-si, Gyeonggi-do 16674 (KR)
(72) Inventor: Choi, Wonmi, 16674 Suwon-si, Gyeonggi-do (KR); Oh, Yuhong, 16674 Suwon-si, Gyeonggi-do (KR); Ahn, Jihye, 16674 Suwon-si, Gyeonggi-do (KR); Kim, Dojeon, 16674 Suwon-si, Gyeonggi-do (KR); Kim, Byungkun, 16674 Suwon-si, Gyeonggi-do (KR); Kim, Hongseok, 16674 Suwon-si, Gyeonggi-do (KR); Jung, Jinwook, 16674 Suwon-si, Gyeonggi-do (KR)
(74) Representative: Grünecker Patent- und Rechtsanwälte PartG mbB

(57) **Abstract**

A multilayer ceramic capacitor (100) including a capacitor body (110) including a plurality of dielectric layers (111) and a plurality of internal electrode layers (121, 122) stacked with the dielectric layers (111) interposed therebetween, and external electrodes (131, 132) disposed on an outer surface of the capacitor body (110) and connected to at least one of the internal electrode layers (121, 122), wherein the internal electrode layers (121, 122) include nickel (Ni) and germanium (Ge), the internal electrode layers (121, 122) connected to the external electrodes (131, 132) have an end region (R1, R2) defined as a region extending from an interface between the internal electrode layers (121, 122) and the external electrodes (131, 132) to a length of 15 µm in a direction (L) of the internal electrode layers (121, 122), and at least one of the end regions (R1, R2) and the external electrodes (131, 132) include nickel (Ni), copper (Cu), and germanium (Ge), (Ni-Cu-Ge alloy). Manufacturing method of the multilayer ceramic capacitor.

## Description

### BACKGROUND

The present disclosure relates to a multilayer ceramic capacitor and a method of manufacturing the same.

As electronic components using a ceramic material, there are a capacitor, an inductor, a piezoelectric element, a varistor, a thermistor, and the like. Among ceramic electronic components, a multilayer ceramic capacitor (MLCC) may be used in various electronic devices due to advantages such as a small size, a high capacitance, an easy mounting feature, and the like.

For example, a multilayer ceramic capacitor (MLCC) may be used in a chip type condenser mounted on a board of several electronic products such as image devices, for example, liquid crystal displays (LCD), plasma display panels (PDP), organic light-emitting diode (OLED) or the like, computers, personal portable terminals, smartphones, and the like, to serve to charge or discharge electricity therein or therefrom.

With the recent development of electronic devices and autonomous vehicles, there is a growing demand for miniaturization and larger capacitance of multilayer ceramic capacitors. In order to achieve higher capacitance in the same volume, thinning of the internal electrode layer is essential. However, thinning of the internal electrode layer increases the electric field intensity per unit area, which leads to a deterioration in reliability.

### SUMMARY

The invention is what is claimed in the independent claims. Preferred embodiments are specified in the dependent claims.

An embodiment provides a multilayer ceramic capacitor having excellent reliability.

Another embodiment provides a method of manufacturing a multilayer ceramic capacitor.

An embodiment provides a multilayer ceramic capacitor including a capacitor body including a plurality of dielectric layers and a plurality of internal electrode layers stacked with at least one of the dielectric layers interposed therebetween, and an external electrode disposed on an outer surface of the capacitor body and connected to at least one of the internal electrode layers, wherein the at least one of the internal electrode layers includes nickel (Ni) and germanium (Ge), the at least one of the internal electrode layers connected to the external electrode has an end region defined as a region extending from an interface between the at least one of the internal electrode layers and the external electrode to a length of about 15 µm in a direction away from the interface and toward an interior of the at least one of the internal electrode layers, and the end region, the external electrode, or both of the end region and the external electrode include nickel (Ni), copper (Cu), and germanium (Ge).

The end region may include nickel (Ni), copper (Cu), and germanium (Ge).

The end region, the external electrode, or both of the end region and the external electrode may include germanium (Ge) in an amount of about 0.01 part by mole to about 4 parts by mole based on 100 parts by mole of nickel (Ni).

The end region, the external electrode, or both of the end region and the external electrode may include germanium (Ge) in an amount of about 0.1 part by mole to about 1 part by mole based on 100 parts by mole of nickel (Ni).

The end region may include germanium (Ge) in an amount of about 0.01 part by mole to about 4 parts by mole based on 100 parts by mole of nickel (Ni).

The end region may include germanium (Ge) in an amount of about 0.1 part by mole to about 1 part by mole based on 100 parts by mole of nickel (Ni).

The interface between the internal electrode layer and the external electrode may be positioned on a straight line passing through an end of the at least one of the dielectric layers in a stacking direction.

A molar ratio of Cu to Ni in the end region may be about 0.01 to about 3.

Ni, Cu, and Ge included in the end region, the external electrode, or both of the end region and the external electrode are in a form of Ni-Cu-Ge alloy.

The internal electrode layer may include germanium (Ge) in an amount of about 0.01 part by mole to about 4 parts by mole based on 100 parts by mole of nickel (Ni).

Another embodiment provides a multilayer ceramic capacitor including a capacitor body including a plurality of dielectric layers and a plurality of internal electrode layers stacked with at least one of the dielectric layers interposed therebetween, and an external electrode disposed on an outer surface of the capacitor body and connected to at least one of the internal electrode layers, wherein the at least one of the internal electrode layers includes an inner region and an interface region disposed on at least one surface of the inner region in a stacking direction, the interface region including an interface with the dielectric layer, where the inner region and the interface region include nickel (Ni) and germanium (Ge), the at least one of the internal electrode layers connected to the external electrode has an end region defined as a region extending from an interface between the at least one of the internal electrode layers and the external electrode to a length of about 15 µm in a direction away from the interface and toward an interior of the at least one of the internal electrode layers, and the end region, the external electrode, or both of the end region and the external electrode include nickel (Ni), copper (Cu), and germanium (Ge).

The average content of germanium (Ge) in the interface region may be higher than the average content of germanium (Ge) in the inner region.

The average molar ratio of an amount of germanium (Ge) in the interface region relative to an amount of germanium (Ge) in the inner region may be greater than about 1 and less than or equal to about 5.

The interface region may be a region having a length of about 2 nm from the interface of the internal electrode layer and the dielectric layer to an inside of the internal electrode layer.

An average content of germanium (Ge) in the interface region may be about 0.4 part by mole to about 12 parts by mole based on 100 parts by mole of nickel (Ni) in the interface region.

An average content of germanium (Ge) in the inner region may be about 0.2 part by mole to about 10 parts by mole based on 100 parts by mole of nickel (Ni) in the inner region.

The interface region may further include germanium oxide (GeO₂).

Another embodiment provides a method of manufacturing a multilayer ceramic capacitor, including preparing a conductive paste by mixing nickel (Ni) and a germanium (Ge)-based raw material; manufacturing a plurality of dielectric green sheets from a dielectric slurry, and forming a conductive paste layer by applying the conductive paste on a surface of each of at least two dielectric green sheets among the plurality of dielectric green sheets; manufacturing a dielectric green sheet stack by stacking the at least two dielectric green sheets on which the conductive paste layer is formed; manufacturing a capacitor body including a dielectric layer and an internal electrode layer by firing the dielectric green sheet stack; and forming an external electrode connected to the internal electrode layer on an outer surface of the capacitor body, wherein the internal electrode layer includes nickel (Ni) and germanium (Ge), the internal electrode layer connected to the external electrode has an end region defined as a region extending from an interface between the internal electrode layer and the external electrode to a length of about 15 µm in a direction away from the interface and toward an interior of the internal electrode layer, and the end region, the external electrode, or both of the end region and the external electrode include nickel (Ni), copper (Cu), and germanium (Ge).

The germanium (Ge)-based raw material may include at least one selected from the group consisting of germanium (Ge), germanium oxide (GeO₂), and Ni-Ge alloy.

The germanium (Ge)-based raw material may be mixed in an amount of about 0.1 part by weight to about 10 parts by weight of germanium (Ge) based on 100 parts by weight of nickel (Ni).

A multilayer ceramic capacitor according to an embodiment can have improved moisture resistance and high-temperature reliability due to its excellent corrosion resistance.

### BRIEF DESCRIPTION OF THE DRAWINGS

FIG. 1 is a perspective view showing a multilayer ceramic capacitor according to an embodiment.
FIG. 2A is a cross-sectional view of the multilayer ceramic capacitor taken along line I-I' of FIG. 1.
FIG. 2B is an enlarged view of the X1 region in FIG. 2A.
FIG. 2C is an enlarged view of the X2 region in FIG. 2A.
FIG. 2D is an enlarged view of the X3 region in FIG. 2A.
FIG. 3 is a cross-sectional view of the multilayer ceramic capacitor taken along line II-II' of FIG. 1.
FIG. 4 is an exploded perspective view illustrating the stacked structure by disassembling the capacitor body of FIG. 1.
FIG. 5 is a graph showing the change in diffusion coefficient (D_{AN}) according to Ge content in a Ni- and Ge-containing alloy.
FIG. 6 is a schematic diagram showing the interface between the internal electrode layer and the external electrode according to an embodiment.
FIG. 7A and FIG. 7B are transmission electron microscope-energy dispersive spectroscopy (TEM-EDS) analysis images of the end region of the internal electrode layer according to Example 3.
FIG. 7C is a transmission electron microscope-energy dispersive spectroscopy (TEM-EDS) line analysis graph for the end region of the internal electrode layer according to Example 3.
FIG. 7D is an enlarged view of a portion of FIG. 7C.
FIG. 8A and FIG. 8B are transmission electron microscope-energy dispersive spectroscopy (TEM-EDS) analysis images of the end region of the internal electrode layer according to Comparative Example 1.
FIG. 8C is a transmission electron microscope-energy dispersive spectroscopy (TEM-EDS) line analysis graph for the end region of the internal electrode layer according to Comparative Example 1.
FIG. 9A to FIG. 9C are transmission electron microscope-energy dispersive spectroscopy (TEM-EDS) analysis images of the internal electrode layer according to Example 3.
FIG. 10A to FIG. 10D are transmission electron microscope-energy dispersive spectroscopy (TEM-EDS) mapping analysis images of the internal electrode layer according to Example 3.
FIG. 11A is a transmission electron microscope-energy dispersive spectroscopy (TEM-EDS) line analysis graph for the straight section of FIG. 10A.
FIG. 11B is an enlarged view of a portion of FIG. 11A.

### DETAILED DESCRIPTION

Hereinafter, the present disclosure will be described in detail hereinafter with reference to the accompanying drawings, in which embodiments of the present disclosure are shown. The drawings and description are to be regarded as illustrative in nature and not restrictive. Like reference numerals designate like elements throughout the specification. In the accompanying drawings, some components are exaggerated, omitted, or schematically illustrated, and the size of each component does not entirely reflect the actual size.

The accompanying drawings are intended only to facilitate an understanding of the embodiments disclosed in this specification, and it is to be understood that the technical ideas disclosed herein are not limited by the accompanying drawings and include all modifications, equivalents, or substitutions that are within the range of the ideas and technology of the present disclosure.

Although terms of "first," "second," and the like are used to explain various components, the components are not limited to such terms. These terms are only used to distinguish one component from another component.

In addition, it will be understood that when an element such as a layer, film, region, or substrate is referred to as being "on" another element, it can be directly on the other element or intervening elements may also be present. In contrast, when an element is referred to as being "directly on" another element, there are no intervening elements present. Further, when an element is referred to as being "on" or "above" a reference element, it can be positioned above or below the reference element, and it is not necessarily referred to as being positioned "on" or "above" in a direction opposite to gravity.

Throughout the specification, the terms "comprise" or "have" are intended to specify the presence of stated features, integers, steps, operations, components, components or a combination thereof, but do not preclude the presence or addition of one or more other features, integers, steps, operations, components, components, and/or groups thereof. Therefore, unless explicitly described to the contrary, the word "comprise" and variations such as "comprises" or "comprising" will be understood to imply the inclusion of stated elements but not the exclusion of any other elements.

Further, throughout the specification, the phrase "in a plan view" or "on a plane" means viewing a target portion from the top, and the phrase "in a cross-sectional view" or "on a cross-section" means viewing a cross-section formed by vertically cutting a target portion from the side.

Throughout the specification, the term "connected" does not mean only that two or more constituent components are directly connected, but may also mean that two or more constituent components are indirectly connected through another constituent component, that two or more components are electrically connected as well as physically connected, or that two or more constituent components are referred to by different names but are united by location or function.

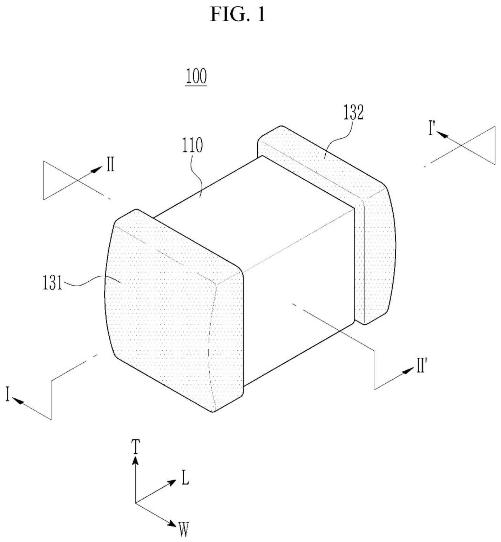

Hereinafter, a multilayer ceramic capacitor according to an embodiment will be described with reference to FIGS. 1 to 4.

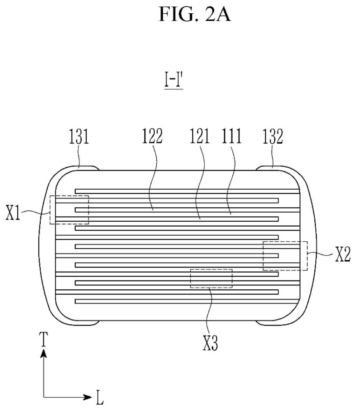

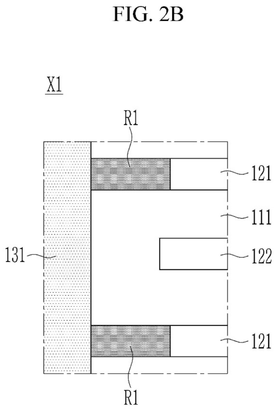

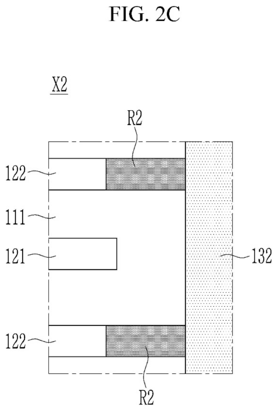

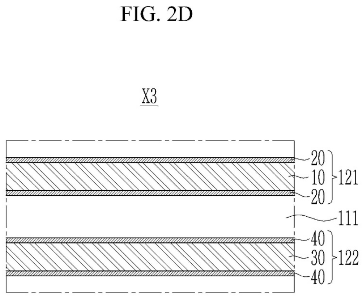

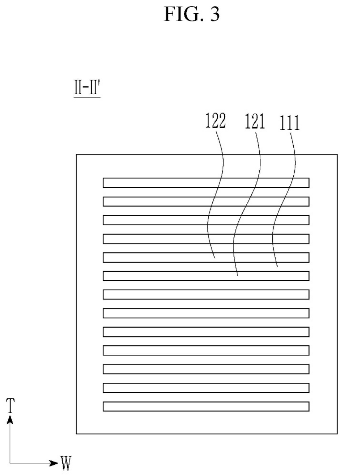

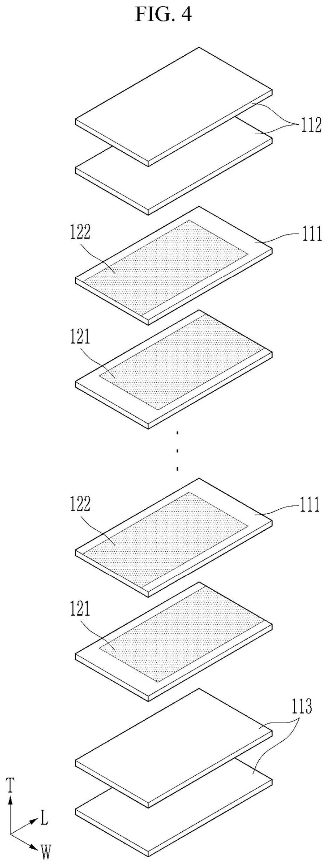

FIG. 1 is a perspective view showing a multilayer ceramic capacitor according to an embodiment. FIG. 2A is a cross-sectional view of the multilayer ceramic capacitor taken along line I-I' of FIG. 1, FIG. 2B is an enlarged view of the X1 region in FIG. 2A, FIG. 2C is an enlarged view of the X2 region in FIG. 2A, and FIG. 2D is an enlarged view of the X3 region in FIG. 2A. FIG. 3 is a cross-sectional view of the multilayer ceramic capacitor taken along line II-II' of FIG. 1. FIG. 4 is an exploded perspective view illustrating the stacked structure by disassembling the capacitor body of FIG. 1.

The L-axis, W-axis, and T-axis shown in FIGS. 1 to 4 represent a length direction, a width direction, and a thickness direction of a capacitor body 110, respectively. Here, the thickness direction (T-axis direction) may be a direction perpendicular to the wide surface (major surface) of the sheet-shaped components, and may be used as the same concept as a stacking direction in which a dielectric layer 111 are stacked, for example. The length direction (L-axis direction) may be a direction extending parallel to the wide surface (major surface) of the sheet-shaped components, and may be approximately perpendicular to the thickness direction (T-axis direction). For example, the length direction (L-axis direction) may be the direction in which an external electrode 131 and a second external electrode 132 are positioned. The width direction (W-axis direction) may be a direction extending parallel to the wide surface (major surface) of the sheet-shaped components, and may be approximately perpendicular to the thickness direction (T-axis direction) and the length direction (L-axis direction). The length of the sheet-shaped components in the length direction (L-axis direction) may be longer than the length in the width direction (W-axis direction).

Referring to FIGS. 1 to 4, a multilayer ceramic capacitor according to an embodiment includes the capacitor body 110 and external electrodes 131 and 132 disposed on an outer surface of the capacitor body 110. The external electrodes 131 and 132 may include a first external electrode 131 and a second external electrode 132 disposed at opposite ends of the capacitor body 110 in the length direction (L-axis direction).

For example, the capacitor body 110 may have a roughly hexahedral shape.

For convenience of description of an embodiment, the two surfaces opposing each other in the thickness direction (T-axis direction) of the capacitor body 110 are referred to as first and second surfaces, the two surfaces connected to the first and second surfaces and opposing each other in the length direction (L-axis direction) are referred to as third and the fourth surfaces, and two surfaces connected to the first and second surfaces and to the third and fourth surfaces, and opposing each other in the width direction (W-axis direction) are referred to as the fifth and sixth surfaces.

As an example, the first surface, which is the lower surface, may be a surface facing the mounting direction. Additionally, the first to the sixth surfaces may be flat, but the embodiment is not limited thereto. For example, the first to the sixth surfaces may be curved surfaces with a convex central portion, and the edges, which are the boundaries of each surface, may be rounded.

The shape and size of the capacitor body 110 and the number of stacks of the dielectric layers 111 are not limited to those shown in the drawings of the embodiment.

The capacitor body 110 includes a plurality of dielectric layers 111 and internal electrode layers 121 and 122. Specifically, the capacitor body 110 includes the plurality of dielectric layers 111 and a first internal electrode layer 121 and a second internal electrode layer 122 alternately disposed in the thickness direction (T-axis direction) interposing the dielectric layer 111.

At this time, the boundaries between adjacent dielectric layers 111 of the capacitor body 110 may be integrated to the extent that it is difficult to check without using a scanning electron microscope (SEM).

The capacitor body 110 may include an active region and cover regions 112 and 113.

The active region is a region where the dielectric layer 111 and the internal electrode layers 121 and 122 are alternately stacked, which contributes to forming capacitance of the multilayer ceramic capacitor 100. Specifically, the active region may be a region where the first internal electrode layer 121 and the second internal electrode layer 122 stacked along the thickness direction (T-axis direction) overlap.

The cover regions 112 and 113 are thickness-direction marginal portions, and may be positioned on the first and second surfaces of the body in the thickness direction (T-axis direction), respectively. The cover regions 112 and 113 may be a single dielectric layer 111 or two or more dielectric layers 111 stacked on the upper and lower surfaces of the active region, respectively.

Additionally, the capacitor body 110 may further include side margin regions.

The side margin regions may be located on opposite side ends of the active region in the width direction (W-axis direction), that is, on the fifth surface and the sixth surface, respectively. The side margin regions may be formed according as, when a conductive paste layer for the internal electrode is applies on a surface of a dielectric green sheet, the dielectric green sheets, which are applied with the conductive paste layer only in a partial region of the surface of the dielectric green sheet and not applied with the conductive paste layer on both side surfaces of the surface of the dielectric green sheet, are stacked and then fired, but the forming method is not limited thereto.

The cover regions 112 and 113 and the side margin regions may serve to prevent damage to the first internal electrode layer 121 and the second internal electrode layer 122 due to physical or chemical stress.

The internal electrode layers 121 and 122, i.e., the first internal electrode layer 121 and the second internal electrode layer 122, are electrodes having different polarities and are alternately disposed to face each other along the T-axis direction with the dielectric layer 111 interposed between them, and one end may be exposed through the third and fourth surfaces of the capacitor body 110, respectively.

The first internal electrode layer 121 and the second internal electrode layer 122 may be electrically insulated from each other by the dielectric layer 111 disposed in the middle.

The ends of the first internal electrode layer 121 and the second internal electrode layer 122, which are alternately exposed through the third and fourth surfaces of the capacitor body 110, may be electrically connected to the first external electrode 131 and the second external electrode 132, respectively.

The internal electrode layers 121 and 122 may include nickel (Ni) and germanium (Ge). In the internal electrode layers 121 and 122, nickel (Ni) and germanium (Ge) may be included as a main component and a secondary component, respectively.

Referring to FIGS. 2A to 2C, the internal electrode layers 121 and 122 connected to the external electrodes 131 and 132 may have end regions R1 and R2, each defined as a region extending from an interface between the internal electrode layers 121 and 122 and the external electrodes 131 and 132 to a length of about 15 µm in a direction of the internal electrode layers 121 and 122. Specifically, the first internal electrode layer 121 connected to the first external electrode 131 may have a first end region R1 defined as a region extending from an interface between the first internal electrode layer 121 and the first external electrode 131 to a length of about 15 µm in a direction of the first internal electrode layer 121. The second internal electrode layer 122 connected to the second external electrode 132 may have a second end region R2 defined as a region extending from an interface between the second internal electrode layer 122 and the second external electrode 132 to a length of about 15 µm in a direction of the second internal electrode layer 122. End regions R1 and R2 may be observed via electron microscopy, for example, scanning electron microscopy (SEM) and transmission electron microscopy (TEM). Other methods and/or tools appreciated by one of ordinary skill in the art, even if not described in the present disclosure, may also be used.

Here, the direction of the internal electrode layers 121 and 122 may be the length direction (L-axis direction) of the capacitor body 110. The length direction (L-axis direction) can be a direction that is approximately perpendicular to the thickness direction (T-axis direction), which is the stacking direction, and can include not only a direction that is orthogonal to the thickness direction (T-axis direction), but also a direction at an angle close to 90 degrees with respect thereto.

At least one of the end regions R1 and R2 of the internal electrode layers 121 and 122 and the external electrodes 131 and 132 may include nickel (Ni), copper (Cu), and germanium (Ge). In other words, nickel (Ni), copper (Cu), and germanium (Ge) may exist together near the interface between the internal electrode layers 121 and 122 and the external electrodes 131 and 132.

Ni can be derived from the raw material for forming the internal electrode layer, and Cu can be derived from the raw material for forming the external electrode. Additionally, Ge may be derived from a Ge-based raw material mixed with Ni, which is the main component, during the formation of the internal electrode layer, or may be derived and diffused from a Ge-based raw material mixed with a barium titanate-based compound, which is the main component, during the formation of the dielectric layer.

In general, a Ni-Cu alloy may be locally formed in end regions of the internal electrode layers 121 and 122 where the internal electrode layers 121 and 122 and the external electrodes 131 and 132 meet by diffusion of Cu, which is a component of the external electrodes. That is, the diffusion coefficient of Cu is nearly 100 times greater than that of Ni at a temperature range of 660°C to 730°C. Because of the large difference in diffusion coefficients, diffusion predominantly occurs from Cu toward Ni, and formation of a Ni-Cu alloy can be expected in the end region of the internal electrode layer. As a result, corrosion of Ni in the end region of the internal electrode layer caused by penetration of a plating solution during the plating process can be prevented.

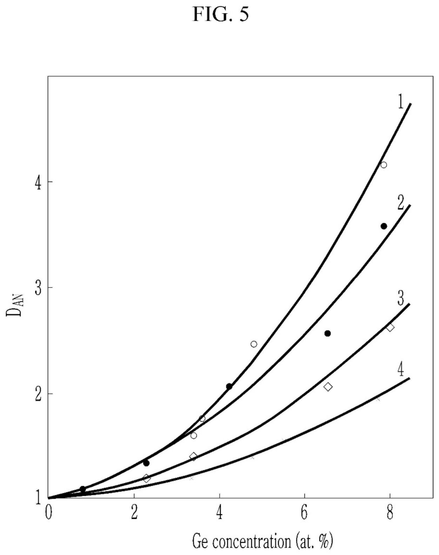

FIG. 5 is a graph showing the change in diffusion coefficient (D_{AN}) according to Ge content in a Ni- and Ge-containing alloy.

According to an embodiment, when Ge is included and alloyed together with Ni in the internal electrode layer, as shown in FIG. 5, diffusion from Cu toward Ni can be facilitated, resulting in a higher degree of Cu penetration than in the case where a pure Ni internal electrode layer is used. Accordingly, corrosion resistance can be further enhanced, and moisture resistance and high-temperature reliability can be significantly improved.

In other words, according to an embodiment, by including Ni, Cu, and Ge near the interface between the internal electrode layer and the external electrode, specifically, at least one of the end regions R1 and R2 of the internal electrode layers 121 and 122 and the external electrodes 131 and 132, the corrosion resistance is excellent, so that the moisture resistance reliability and high-temperature reliability of the multilayer ceramic capacitor can be improved.

For example, Ni, Cu, and Ge may be in the form of an alloy, specifically a Ni-Cu-Ge alloy. By including a Ni-Cu-Ge alloy in at least one of the end regions R1 and R2 and the external electrodes 131 and 132, corrosion resistance of Ni in the end regions of the internal electrode layers can be improved, and thus a multilayer ceramic capacitor with excellent moisture resistance reliability and high-temperature reliability can be secured.

At least one of the end regions R1 and R2 and the external electrodes 131 and 132 may include Ge in an amount of about 0.01 part by mole to about 4 parts by mole based on 100 parts by mole of Ni in the corresponding region, for example, about 0.06 part by mole to about 3.5 parts by mole, about 0.07 part by mole to about 3 parts by mole, about 0.08 part by mole to about 2.5 parts by mole, about 0.09 part by mole to about 2 parts by mole, about 0.1 part by mole to about 1.5 parts by mole, or about 0.1 part by mole to about 1 part by mole. When the content of Ge in the corresponding region is within the above range, the corrosion resistance against Ni is excellent, so that the moisture resistance reliability and high-temperature reliability of the multilayer ceramic capacitor can be improved.

For example, Ni, Cu, and Ge may be included in the end regions R1 and R2.

The molar ratio of Cu to Ni in the end regions R1 and R2 may be about 0.01 to about 3, and, for example, about 0.02 to about 2.5, about 0.03 to about 2.0, about 0.04 to about 1.5, or about 0.05 to about 1.1. When the molar ratio of Cu to Ni in the end regions R1 and R2 is within the above range, corrosion the corrosion resistance against Ni is excellent, so that the moisture resistance reliability and high-temperature reliability of the multilayer ceramic capacitor can be improved.

The presence and content of Ni, Cu, and Ge in at least one of the end regions R1 and R2 and the external electrodes 131 and 132 can be confirmed by transmission electron microscopy-energy dispersive spectroscopy (TEM-EDS) analysis. Other methods and/or tools appreciated by one of ordinary skill in the art, even if not described in the present disclosure, may also be used.

Specifically, after placing the multilayer ceramic capacitor 100 horizontally, the periphery of the multilayer ceramic capacitor 100 is fixed with epoxy resin, and polished with a polisher to obtain a cross-sectional sample having an LT surface so that the capacitor body 110 and external electrodes 131 and 132 can be observed. Next, the cross-sectional sample is measured using a transmission electron microscope (TEM). For example, when the cross-sectional sample is divided into three parts, an upper region, a central region, and a lower region, in the stacking direction, i.e., in the thickness direction (T-axis direction), it can be measured by TEM so that the external electrodes 131 and 132 and at least one of the internal electrode layer 121 or 122 connected thereto are visible in each region. For example, TEM can be measured under conditions of acceleration voltage of 200 kV and magnification of 40k using Xe-Focused Ion Beam (FIB) for each region. Next, energy dispersive spectroscopy (EDS) analysis is performed on each TEM image of the measured cross-sectional sample to confirm the elements and their contents present in the end regions R1 and R2 of the internal electrode layers 121 and 122 and the external electrodes 131 and 132.

For example, in each TEM image of the measured cross-sectional sample, end regions R1 and R2 are designated as a region extending from the interface between the external electrodes 131 and 132 and the internal electrode layers 121 and 122 to a length of about 15 µm in the direction of the internal electrode layer, and then an arbitrary straight section is designated in the stacking direction, i.e., in a direction perpendicular to the direction of the internal electrode layer, within the end regions R1 and R2. For example, a straight section may be designated in the stacking direction, i.e., in a direction perpendicular to the direction of the internal electrode layer, based on a point having a length of about 1 µm from the interface between the external electrode and the internal electrode layer. Next, EDS line analysis can be performed on the straight section.

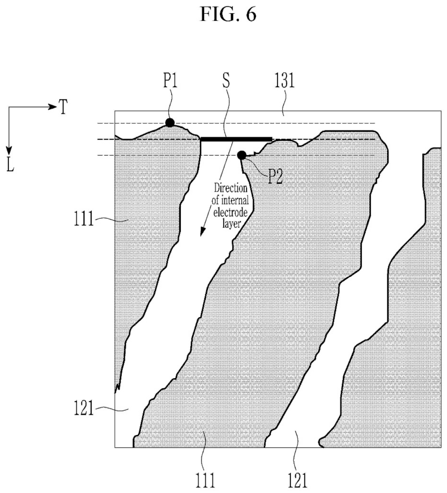

At this time, the interface between the external electrode and the internal electrode layer may be positioned on a straight line passing through an end of the dielectric layer in a stacking direction. The interface between the external electrode and the internal electrode layer can be specifically described with reference to FIG. 6.

FIG. 6 is a schematic diagram showing the interface between the internal electrode layer and the external electrode according to an embodiment.

Referring to FIG. 6, the interface S between the external electrode and the internal electrode layer can be positioned on a straight line passing through one end of the two upper and lower dielectric layers 111 adjacent to the internal electrode layer 121 in the stacking direction in the TEM image. At this time, one end of the two dielectric layers 111 may be a straight line passing through the average point of the highest point P1 and the lowest point P2 among the ends of the two dielectric layers 111 in the stacking direction. Here, the highest point P1 and the lowest point P2 may mean the highest peak and the deepest valley on the cross-sectional curve of the ends of the two dielectric layers 111 based on the direction perpendicular to the stacking direction, i.e., the length direction (L-axis direction).

In addition, in each TEM image of the measured cross-sectional sample, an arbitrary point can be designated within the end regions R1 and R2, which are regions extending from the interface between the external electrodes 131 and 132 and the internal electrode layers 121 and 122 to a length of about 15 µm in the direction of the internal electrode layer, and the content of each element can be measured through EDS analysis at that point. For example, by designating the end regions in the three internal electrode layers connected to the external electrode for each upper region, central region, and lower region of the cross-sectional sample, the average value of the content of each element at a point having an arbitrary length in a total of nine end regions can be calculated. Through this, the Ge content and Cu/Ni molar ratio in the end regions R1 and R2 can be measured.

In addition, the Ge content in the external electrodes 131 and 132 can be calculated as the average value of the Ge content in a total of 9 points by designating 3 arbitrary points in the external electrodes connected to the internal electrode layer for each upper region, central region, and lower region.

The internal electrode layers 121 and 122 may include Ge in an amount of about 0.01 part by mole to about 4 parts by mole based on 100 parts by mole of Ni, for example, about 0.06 part by mole to about 3.5 parts by mole, about 0.07 part by mole to about 3 parts by mole, about 0.08 part by mole to about 2.5 parts by mole, about 0.09 part by mole to about 2 parts by mole, about 0.1 part by mole to about 1.5 parts by mole, or about 0.1 part by mole to about 1 part by mole. The content of Ge represents the average content in the entire internal electrode layer. When the content of Ge in the internal electrode layer is within the above range, the corrosion resistance against Ni is excellent, so that the moisture resistance reliability and high-temperature reliability of the multilayer ceramic capacitor can be improved.

The content of Ge in the internal electrode layers 121 and 122 can be confirmed by transmission electron microscopy-energy dispersive spectroscopy (TEM-EDS) analysis. Other methods and/or tools appreciated by one of ordinary skill in the art, even if not described in the present disclosure, may also be used.

After placing the multilayer ceramic capacitor 100 in an epoxy mixing solution and curing it, the W-axis and T-axis direction surfaces (WT surfaces) of the capacitor body 110 are polished to a depth of 1/2 in the L-axis direction. After polishing, the polished surface is processed by ion milling, fixed, and maintained in a vacuum atmosphere chamber to obtain a cross-sectional sample so that the active region where the dielectric layer 111 and the internal electrode layers 121 and 122 intersect can be observed. Next, when the active region of the cross-sectional sample is divided into three parts, an upper region, a central region, and a lower region in the stacking direction, it can be measured using a transmission electron microscope (TEM) so that at least one dielectric layer 111 and at least one of the internal electrode layers 121 and 122 are visible in each region. For example, TEM can be measured under conditions of an acceleration voltage of 200 kV and a magnification of 40 k using a Xe-Focused Ion Beam (FIB). Next, in each TEM image of the measured cross-sectional sample, energy dispersive spectroscopy (EDS) line analysis is performed on a straight line section from a point in an arbitrary dielectric layer to a point in an internal electrode layer adjacent to the dielectric layer.

For example, in the TEM images of each of the upper region, central region, and lower region of the active region, at least one of the internal electrode layers 121 and 122 is randomly selected for each region, and multiple points are designated in the internal electrode layers 121 and 122 of each region, and the Ge content at the corresponding points is measured through EDS analysis to obtain an average value. For example, by selecting two internal electrode layers each from the upper region, central region, and lower region of the active region and designating five equally spaced points in each internal electrode layer, the Ge content at the corresponding points can be measured through EDS analysis, and the average value of the Ge content at a total of 30 points can be obtained.

Referring to FIG. 2D, the internal electrode layers 121 and 122 according to an embodiment may include inner regions 10 and 30 and interface regions 20 and 40 disposed on at least one surface of the inner regions 10 and 30 in the stacking direction and including an interface with the dielectric layer (111). That is, the first internal electrode layer 121 may include a first inner region 10 and a first interface region 20 disposed on at least one surface of the first inner region 10 in the stacking direction and including an interface with the dielectric layer 111. Additionally, the second internal electrode layer 122 may include a second inner region 30 and a second interface region 40 disposed on at least one surface of the second inner region 30 in the stacking direction and including an interface with the dielectric layer 111.

The inner regions 10 and 30 and the interface regions 20 and 40 of the internal electrode layers 121 and 122 may include Ni and Ge.

According to an embodiment, the average content of Ge in the interface regions 20 and 40 may be higher than the average content of Ge in the inner regions 10 and 30.

Typically, the firing process in the manufacture of multilayer ceramic capacitors causes oxidation of Ni, the material of the internal electrode layer, to form nickel oxide. The formation of these Ni oxides causes a decrease in the high-temperature reliability of multilayer ceramic capacitors.

Germanium (Ge) is an element with a stronger oxidation tendency than nickel (Ni). When germanium (Ge) is applied to the internal electrode layer in the multilayer ceramic capacitor, it acts as a catalyst that promotes the reduction of Ni oxide, thereby suppressing the oxidation of nickel and allowing Ge and GeO₂ to coexist during firing. During the squeeze-out process of GeO₂ into the dielectric layer, some GeO₂ may be trapped at the interface between the dielectric layer and the internal electrode layer, while some GeO₂ remains in the reduced Ge state and may exist in the internal electrode layer. At this time, GeO₂ located at the interface between the dielectric layer and the internal electrode layer can form a thin layer. The insulating layer of GeO₂, which has a higher band gap energy of 6.6 eV compared to BaTiO₃, which has a band gap energy of 3.4 eV, has the effect of improving the interfacial resistance, which hinders the interfacial electron movement between the dielectric layer and the internal electrode layer, thereby improving the high-temperature reliability of the multilayer ceramic capacitor.

In other words, according to an embodiment, when germanium (Ge) is present not only in the internal electrode layers 121 and 122 but also in a higher content in the interface regions 20 and 40 than in the inner regions 10 and 30, the interfacial resistance between the dielectric layer 111 and the internal electrode layers 121 and 122 increases, thereby securing a multilayer ceramic capacitor with excellent reliability.

The average content of Ge may be the parts by mole of Ge expressed based on 100 parts by mole of Ni in each region.

The interface regions 20 and 40 may be a region having a length of about 2 nm from the interface between the internal electrode layers 121 and 122 and the dielectric layer 111 to the inside of the internal electrode layers 121 and 122.

Specifically, when analyzing a Transmission Electron Microscope-Energy Dispersive Spectroscopy (TEM-EDS) line for a straight section from a point of the dielectric layer 111 to a point of the internal electrode layers 121 and 122 adjacent to the dielectric layer 111, the interface regions 20 and 40 of the internal electrode layers 121 and 122 can have the maximum mol% of germanium (Ge).

More specifically, when analyzing a Transmission Electron Microscope-Energy Dispersive Spectroscopy (TEM-EDS) line for a straight section from a point of the dielectric layer 111 to a point of the internal electrode layers 121 and 122 adjacent to the dielectric layer 111, the interface between the internal electrode layers 121 and 122 and the dielectric layer 111 is defined as a point that is about 1/3 of the maximum mol% of nickel (Ni), and the interface regions 20 and 40 are defined as regions from a point that is about 1/3 of the maximum mol% of nickel (Ni) to a distance of about 2 nm inside the internal electrode layer.

Through the aforementioned TEM-EDS analysis method for the internal electrode layers 121 and 122, it is possible to distinguish the inner regions 10 and 30 and the interface regions 20 and 40, as well as compare the contents of germanium (Ge) in the two regions.

Additionally, the average content of germanium (Ge) in each region can be obtained as follows. In the TEM images of the upper region, the central region, and the lower region of the above-described active region, at least one of internal electrode layers 121 and 122 is randomly selected for each region, and a plurality of points located in the interface regions 20 and 40 and a plurality of points located in the inner regions 10 and 30 are designated for each internal electrode layers 121 and 122 of each region, and the Ge content at the corresponding points is measured through EDS, so that the average value X of the Ge content in the interface regions 20 and 40 and the average value Y of the Ge content in the inner regions 10 and 30 can be obtained. For example, by selecting one internal electrode layer each from the upper region, central region, and lower region of the active region, and designating three arbitrary points within the interface region and 12 arbitrary points within the internal region for each internal electrode layer, the Ge content at each point can be measured using EDS to obtain the average values for the interface region and the inner region. That is, the average value X of the Ge content at a total of 9 points in the interface region (3 internal electrode layers x 3 points within the interface region) is obtained, and also the average value Y of the Ge content at a total of 36 points in the inner region (3 internal electrode layers x 12 points within the inner region) can be obtained. The measured average content of Ge is based on 100 parts by mole of Ni in the corresponding region. Other methods and/or tools appreciated by one of ordinary skill in the art, even if not described in the present disclosure, may also be used.

Specifically, the average molar ratio of germanium (Ge) in the interface regions 20 and 40 to the inner regions 10 and 30, i.e., X/Y, may be greater than about 1 and less than or equal to about 5, for example, about 1.2 to about 4.8, or about 1.4 to about 4.6. When the average molar ratio of germanium (Ge) in the interface region compared to the inner region is within the above range, the interface resistance between the dielectric layer and the internal electrode layer increases, thereby improving the reliability of the multilayer ceramic capacitor. The average molar ratio of Ge is obtained as the ratio of the average value X of the Ge content in the inner region obtained by the above-described method and the average value Y of the Ge content in the interface region.

The interface regions 20 and 40 may further include germanium oxide (GeO₂). In this case, the interface region functions as an insulating layer, which can further increase the interfacial resistance between the dielectric layer and the internal electrode layer.

When analyzing a Transmission Electron Microscope-Energy Dispersive Spectroscopy (TEM-EDS) line for a straight section from a point of the dielectric layer 111 to a point of the internal electrode layers 121 and 122 adjacent to the dielectric layer 111, the inner regions 10 and 30 can have a maximum mol% value of nickel (Ni).

Specifically, the average content X of germanium (Ge) in the interface regions 20 and 40 may be about 0.4 part by mole to about 12 parts by mole based on 100 parts by mole of nickel (Ni) in the corresponding region, for example, about 0.45 part by mole to about 11 parts by mole, or about 0.5 part by mole to about 10 parts by mole. When the average content of germanium (Ge) in the interface region of the internal electrode layer is within the above range, the melting point of the Ni-Ge alloy formed in the internal electrode layer is maintained at an appropriate level, minimizing the balling phenomenon of the electrode, thereby improving the reliability of the multilayer ceramic capacitor.

In addition, the average content Y of germanium (Ge) in the inner regions 10 and 30 may be about 0.2 part by mole to about 10 parts by mole based on 100 parts by mole of nickel (Ni) in the corresponding region, for example, about 0.3 part by mole to about 9 parts by mole, or about 0.5 part by mole to about 8 parts by mole. When the average content of germanium (Ge) in the inner region of the internal electrode layer is within the above range, the interface resistance between the dielectric layer and the internal electrode layer increases, thereby improving the reliability of the multilayer ceramic capacitor.

The interface regions 20 and 40 may further include one or more selected from the group consisting of titanium (Ti) and barium (Ba), in addition to germanium (Ge) and nickel (N). Titanium (Ti) and barium (Ba) can be derived and diffused from a barium titanate-based compound used as a main component in forming a dielectric layer, or can be derived from barium titanate powder as a co-material that can be added as needed in forming an internal electrode layer.

The interface regions 20 and 40 may have a thickness of about 0.05% to about 3% of the total thickness of the internal electrode layers 121 and 122 including the inner regions 10 and 30 and the interface regions 20 and 40 in the stacking direction, for example, may have a thickness of about 0.07% to about 2.8%, or about 0.1% to about 2.5% of the total thickness of the internal electrode layer. When the thickness of the interface region is within the above range, the interface resistance between the dielectric layer and the internal electrode layer increases, thereby improving the reliability of the multilayer ceramic capacitor.

The total thickness of the internal electrode layers 121 and 122 may mean the average thickness of the internal electrode layers 121 and 122.

Each average thickness of the first internal electrode layer 121 and the second internal electrode layer 122 may be about 0.1 µm to about 2 µm. When the average thickness of the internal electrode layers is within the above range, the multilayer ceramic capacitor can have excellent reliability.

The thickness of the interface regions 20 and 40 and the thickness of the internal electrode layers 121 and 122 can be measured by the following methods.

After placing the multilayer ceramic capacitor 100 in an epoxy mixing solution and curing it, the W-axis and T-axis direction surfaces (WT surfaces) of the capacitor body 110 are polished to a depth of 1/2 in the L-axis direction, fixed, and maintained in a vacuum atmosphere chamber, thereby obtaining a cross-sectional sample so that the active region where the dielectric layer 111 and the internal electrode layers 121 and 122 intersect can be observed. Next, the active region of the cross-sectional sample can be measured using a scanning electron microscope (SEM) so that at least one layer of the dielectric layer and the internal electrode layer are visible, for example, one to five layers. For example, SEM can be measured under conditions of 10 kV in a region where at least one dielectric layer and at least one internal electrode layer are visible in the active region using the Verios G4 product from Thermofisher Scientific.

In the SEM image of the cross-sectional sample, the average thickness of the internal electrode layers can be obtained by taking the central point of the length direction (L-axis direction) or width direction (W-axis direction) of each of the internal electrode layers 121 and 122 as a reference point, and taking the mean value of the thickness of each of the internal electrode layers 121 and 122 at 10 points spaced apart from the reference point at a predetermined interval. The intervals of the 10 points may be adjusted depending on the scale of the SEM image, and may be, for example, about 1 µm to about 100 µm, about 1 µm to about 50 µm, or about 1 µm to about 10 µm. At this time, all 10 points must be positioned within each of the internal electrode layers 121 and 122, and if all 10 points are not positioned within each of the internal electrode layers 121 and 122, the position of the reference point may be changed, or the interval between the 10 points may be adjusted. In addition, by extending this average value measurement to 10 internal electrode layers and measuring the average value, the average thickness of the internal electrode layers can be more generalized.

The dielectric layer 111 may include a barium titanate-based compound including barium (Ba) and titanium (Ti) as a main component.

The barium titanate-based compound is a dielectric base material, have high dielectric constants, and contribute to forming the dielectric constant of the multilayer ceramic capacitor 100.

For example, the barium titanate-based compound may include at least one selected from BaTiO₃, Ba(Ti, Zr)Os, Ba(Ti, Sn)O₃, (Ba, Ca)TiO₃, (Ba, Ca)(Ti, Zr)O₃, (Ba, Ca)(Ti, Sn)O₃, (Ba, Sr)TiO₃, (Ba, Sr)(Ti, Zr)O₃ and (Ba, Sr)(Ti, Sn)Os.

The dielectric layer 111 may include germanium (Ge) in addition to barium (Ba) and titanium (Ti).

Germanium (Ge) in the dielectric layer 111 may be derived and diffused from a germanium (Ge)-based raw material mixed with the nickel of main component during formation of the internal electrode layer, or may be derived from a germanium (Ge)-based raw material mixed with the barium titanate-based compound, which is the main component during formation of the dielectric layer.

The dielectric layer 111 may further include a secondary component. The secondary component may further include one or more selected from the group consisting of, for example, manganese (Mn), chromium (Cr), silicon (Si), aluminum (Al), magnesium (Mg), tin (Sn), antimony (Sb), gallium (Ga), indium (In), barium (Ba), lanthanum (La), yttrium (Y), actinium (Ac), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), hafnium (Hf), and vanadium (V).

An average thickness (average length in the T-axis direction) of the dielectric layer 111 may be about 0.2 µm to about 10 µm, and for example, may be about 0.2 µm to about .0 µm. When the average thickness of the dielectric layer 111 is within the above range, the reliability of the multilayer ceramic capacitor may be improved.

This can be obtained by taking the central point in the length direction (L-axis direction) or width direction (W-axis direction) of the dielectric layer 111 as a reference point in the scanning electron microscope (SEM) image of the cross-sectional sample measured as described above, and taking the mean value of the thickness of the dielectric layer 111 at 10 points spaced apart from the reference point at a predetermined interval. The intervals of the 10 points may be adjusted depending on the scale of the SEM image, and may be, for example, about 1 µm to about 100 µm, about 1 µm to about 50 µm, or about 1 µm to about 10 µm. At this time, all 10 points must be positioned within the dielectric layer 111, and if all 10 points are not positioned within the dielectric layer 111, the position of the reference point may be changed, or the interval between the 10 points may be adjusted. In addition, by extending this average value measurement to 10 dielectric layers and measuring the average value, the average thickness of the dielectric layer can be more generalized.

The capacitor body 110 may be formed by firing a stacking structure in which the plurality of dielectric layers 111 and internal electrode layers 121 and 122 are stacked.

The external electrodes 131 and 132, i.e., the first external electrode 131 and the second external electrode 132 are provided with voltages of different polarities and may be electrically connected with exposed portions of the first internal electrode layer 121 and the second internal electrode layer 122, respectively.

According to the above configuration, when a predetermined voltage is applied to the first external electrode 131 and the second external electrode 132, charges are accumulated between the first internal electrode layer 121 and the second internal electrode layer 122 facing each other. At this time, the capacitance of the multilayer ceramic capacitor 100 is proportional to the overlapping area of the first internal electrode layer 121 and the second internal electrode layer 122 that overlap each other along the T-axis direction in the active region.

The first external electrode 131 and the second external electrode 132 may include, respectively, first and second connection portions disposed on the third and fourth surfaces of the capacitor body 110 and connected to the first internal electrode layer 121 and the second internal electrode layer 122, and first and second band portions disposed on edges where the third and fourth surfaces of the capacitor body 110 meet the first and second surfaces or the fifth and sixth surfaces.

The first and second band portions may extend, respectively, from the first and second connection portions to portions of the first and second surfaces or the fifth and sixth surfaces of the capacitor body 110. The first and second band portions may serve to improve the adhesion strength of the first external electrode 131 and the second external electrode 132.

The external electrodes 131 and 132 may include a sintered metal layer in contact with the capacitor body 110, a conductive resin layer disposed to cover the sintered metal layer, and a plating layer disposed to cover the conductive resin layer.

The sintered metal layer may include a conductive metal including copper (Cu), and glass.

In addition to copper (Cu), the conductive metal may further include one or more selected from nickel (Ni), silver (Ag), palladium (Pd), gold (Au), platinum (Pt), tin (Sn), tungsten (W), titanium (Ti), lead (Pb), and alloys thereof. When the conductive metal includes Cu, metals other than Cu may be included in an amount of less than or equal to about 5 parts by mole based on 100 parts by mole of Cu.

The glass may include a composition of mixed oxides, for example, one or more selected from the group consisting of silicon oxide, boron oxide, aluminum oxide, transition metal oxide, alkali metal oxide, and alkaline earth metal oxide. The transition metal may include at least one selected from the group consisting of zinc (Zn), titanium (Ti), copper (Cu), vanadium (V), manganese (Mn), iron (Fe), and nickel (Ni), the alkali metal may be selected from a group consisting of lithium (Li), sodium (Na), and potassium (K), and the alkaline-earth metal may include at least one selected from the group consisting of magnesium (Mg), calcium (Ca), strontium (Sr), and barium (Ba).

Optionally, the conductive resin layer may be formed on the sintered metal layer, and for example, may be formed in the shape that completely covers the sintered metal layer. Meanwhile, the external electrodes 131 and 132 may not include the sintered metal layer, and in this case, the conductive resin layer may directly contact the capacitor body 110.

The conductive resin layer extends to the first and second surfaces or the fifth and sixth surfaces of the capacitor body 110, and the length of the region (i.e., band portion) where the conductive resin layer is extended and disposed to the first and second surfaces or the fifth and sixth surfaces of the capacitor body 110 may be longer than the length of the region (i.e., band portion) where the sintered metal layer is extended and disposed to the first and second surfaces or the fifth and sixth surfaces of the capacitor body 110. That is, the conductive resin layer may be formed on the sintered metal layer, and may be formed in the shape that completely covers the sintered metal layer.

The conductive resin layer may include a resin and a conductive metal.

The resin included in the conductive resin layer may be implemented by a material which has adhesive properties and shock absorption properties and is able to form a paste when mixed with the conductive metal powder, but is not limited thereto. For example, the resin may include a phenolic resin, an acrylic resin, a silicone resin, an epoxy resin, or a polyimide resin.

The conductive metal included in the conductive resin layer serves to be electrically connected to the internal electrode layers 121 and 122 or the sintered metal layer.

The conductive metal included in the conductive resin layer may have a spherical shape, a flake shape, or a combination thereof. That is, the conductive metal may be formed only in flake form, only in spherical form, or in a mixed form of flake form and spherical form.

Here, the spherical shape may also include a shape that is not a perfect spherical shape, for example, a shape in which the length ratio of the major axis and the minor axis (major axis/minor axis) is less than or equal to about 1.45. Flake shape powder refers to a powder with a flat and elongated shape, and is not particularly limited. But for example, the length ratio of the major axis and the minor axis (major axis/minor axis) may be greater than or equal to about 1.95.

The external electrodes 131 and 132 may further include the plating layer disposed outside the conductive resin layer.

The plating layer may include at least one selected from the group consisting of nickel (Ni), copper (Cu), tin (Sn), palladium (Pd), platinum (Pt), gold (Au), silver (Ag), tungsten (W), titanium (Ti), lead (Pb), and alloys thereof. For example, the plating layer may be a Ni plating layer or a Sn plating layer, and may be in a form in which a Ni plating layer and a Sn plating layer are sequentially laminated, or may be in a form in which a Sn plating layer, a Ni plating layer, and a Sn plating layer are sequentially laminated. Additionally, the plating layer may include a plurality of Ni plating layers and/or a plurality of Sn plating layers.

The plating layer may improve mountability to the substrate, structural reliability, durability to the outside, heat resistance, and equivalent series resistance (ESR) of the multilayer ceramic capacitor 100.

Hereinafter, a method of manufacturing the aforementioned multilayer ceramic capacitor 100 will be described.

A multilayer ceramic capacitor 100 according to an embodiment may be manufactured by preparing a conductive paste by mixing nickel (Ni) and a germanium (Ge)-based raw material; manufacturing a dielectric green sheet from a dielectric slurry, and forming a conductive paste layer by applying the conductive paste on a surface of the dielectric green sheet; manufacturing a dielectric green sheet stack by stacking a plurality of the dielectric green sheets on which the conductive paste layer is formed; manufacturing a capacitor body including a dielectric layer and an internal electrode layer by firing the dielectric green sheet stack; and forming an external electrode connected to the internal electrode layer on an outer surface of the capacitor body.

The germanium (Ge)-based raw material may include at least one selected from the group consisting of germanium (Ge) metal, germanium oxide (GeO₂), and Ni-Ge alloy.

The germanium (Ge)-based raw material may be mixed in an amount of about 0.1 part by weight to about 10 parts by weight of germanium (Ge) based on 100 parts by weight of nickel (Ni), for example, in an amount of about 0.1 part by weight to about 5 parts by weight, or about 0.1 part by weight to about 3 parts by weight.

If the germanium (Ge)-based raw material is added in an amount exceeding the above range, the melting point of the internal electrode layer may be lowered, causing agglomeration within the internal electrode layer, which may deteriorate reliability.

In addition to nickel (Ni), the conductive paste may be prepared by mixing one or more conductive metals selected from copper (Cu), silver (Ag), palladium (Pd), gold (Au), and alloys thereof, such as Ag-Pd alloys.

Additionally, the conductive paste may be prepared by additionally mixing conductive powder, binder, and solvent. Additionally, a barium titanate-based compound may be mixed in as a co-agent as needed. The co-agent can act to inhibit the sintering of the conductive powder during the firing process.

The dielectric slurry may be prepared by mixing a barium titanate-based compound as a main component powder and optionally a secondary component powder. The secondary component powder may be an oxide or salt compound, or may be used in the form of a sol dispersed in an organic solvent.

Additionally, the dielectric slurry may be prepared by additionally mixing additives such as a dispersant, a binder, a plasticizer, a lubricant, an antistatic agent, and a solvent.

The dispersant may include, for example, at least one selected from the group consisting of a phosphoric acid ester-based dispersant and a polycarboxylic acid-based dispersant. The dispersant may be mixed in an amount of about 0.1 part by weight to about 5 parts by weight, for example, about 0.3 part by weight to about 3 parts by weight based on 100 parts by weight of the barium titanate-based compound. When the dispersant is mixed within the above content range, the dielectric slurry shows excellent dispersibility, and the amount of impurities included in the manufactured dielectric layer may be reduce.

The binder may be, for example, an acrylic resin, a polyvinyl butyl resin, a polyvinyl acetal resin, an ethylcellulose resin, or the like. The binder may be added in an amount of about 0.1 part by weight to about 50 parts by weight, for example, about 3 parts by weight to about 30 parts by weight, based on 100 parts by weight of the barium titanate-based compound. When the binder is mixed within the above content range, the dielectric slurry shows excellent dispersibility, and the amount of impurities included in the manufactured dielectric layer may be reduced.

The plasticizer may be, for example, a phthalic acid-based compound such as dioctyl phthalate, benzyl butyl phthalate, dibutyl phthalate, dihexyl phthalate, di(2-ethylhexyl) phthalate, and di(2-ethylbutyl) phthalate; an adipic acid-based compound such as dihexyl adipate and di(2-ethylhexyl) adipate; a glycol-based compound such as ethylene glycol, diethylene glycol, and triethylene glycol; a glycol ester-based compound such as triethylene glycol dibutyrate, triethylene glycol di(2-ethylbutyrate), and triethylene glycol di(2-ethylhexanoate); and the like. The plasticizer may be added in an amount of about 0.1 part by weight to about 20 parts by weight, for example, about 1 part by weight to about 10 parts by weight, based on 100 parts by weight of the barium titanate-based compound. When the plasticizer is mixed within the above content range, the dielectric slurry shows excellent dispersibility, and the amount of impurities included in the manufactured dielectric layer may be reduced.

The solvent may be an aqueous solvent such as water; an alcohol-based solvent such as ethanol, methanol, benzyl alcohol, and methoxyethanol; a glycol-based solvent such as ethylene glycol and diethylene glycol; a ketone-based solvent such as acetone, methyl ethyl ketone, methyl isobutyl ketone, and cyclohexanone; an ester-based solvent such as butyl acetate, ethyl acetate, carbitol acetate, and butylcarbitol acetate; an ether-based solvent such as methyl cellosolve, ethyl cellosolve, butyl ether, and tetrahydrofuran; an aromatic-based solvent such as benzene, toluene, and xylene, or the like. The solvent may be, for example, an alcohol-based solvent or aromatic-based solvent, considering solubility or dispersibility of various additives included in the dielectric slurry. The solvent may be mixed in an amount of about 50 parts by weight to about 1000 parts by weight, and for example, about 100 parts by weight to about 500 parts by weight based on 100 parts by weight of the barium titanate-based compound. When the solvent is mixed within the above content range, the dielectric slurry components may be sufficiently mixed, and subsequent removal of the solvent is easy.

The dielectric slurry described above may be mixed by using a wet ball mill or a stirred mill. When using the zirconia balls in the wet ball mill, a plurality of zirconia balls with a diameter of about 0.1 mm to about 10 mm may be used for wet mixing for about 8 hours to about 48 hours, or about 10 hours to about 24 hours.

The prepared dielectric slurry is formed into a dielectric layer after firing.

As a method of molding the prepared the dielectric slurry into a sheet shape, a tape molding method such as a doctor blade method, a calendar roll method, etc. may be used, for example, an on-roll molding coater with a head discharge method, and a dielectric green sheet may be obtained by drying the molded body afterward.

A conductive paste layer is formed by applying the conductive paste described above in a predetermined pattern on a surface of the dielectric green sheet using various printing methods such as screen printing or a transfer method.

According to an embodiment, instead of using a germanium (Ge)-based raw material in the preparation of a conductive paste in which an internal electrode layer is formed, it may be used in the preparation of a dielectric slurry in which a dielectric layer is formed. That is, the multilayer ceramic capacitor 100 can be manufactured by mixing a barium titanate-based compound and a germanium (Ge)-based raw material to prepare a dielectric slurry, then manufacturing a dielectric green sheet using the dielectric slurry, and printing a conductive paste including nickel (Ni) on the surface of the dielectric green sheet to form a conductive paste layer.

Next, a dielectric green sheet stack is prepared by stacking a plurality of layers of dielectric green sheets on which internal electrode patterns are formed, and then pressing the plurality of layers of dielectric green sheets in the stacking direction. At this time, the dielectric green sheet and the internal electrode pattern may be stacked so that the dielectric green sheet is positioned on the upper and lower surfaces of the dielectric green sheet stack in the stacking direction.

The cutting of the manufactured dielectric green sheet stack to a predetermined size by dicing or the like may optionally be performed.

Additionally, the dielectric green sheet stack may be solidified and dried to remove plasticizers, etc., if necessary, and after solidified and dried, the dielectric green sheet stack may be barrel polished using a horizontal centrifugal barrel machine, and the like. In barrel polishing, the dielectric green sheet stack is placed into a barrel container with media and polishing liquid, and rotational motion or vibration is applied to the barrel container, thus unnecessary parts, such as burrs generated during cutting, may be polished. Additionally, after barrel polishing, the dielectric green sheet stack may be washed with a cleaning solution such as water, and dried.

Subsequently, the capacitor body may be manufactured after binder removal treatment and firing of the dielectric green sheet stack.

The conditions for binder removal may be appropriately adjusted depending on the components of the dielectric layer or the internal electrode layer. For example, the rate of temperature rise during binder removal treatment may be about 5 °C/hour to about 300 °C/hour, the support temperature may be about 180 °C to about 400 °C, and the temperature holding time may be about 0.5 hour to about 24 hours. The binder removal may be performed under an air atmosphere or a reducing atmosphere.

The conditions of the firing treatment can be appropriately adjusted depending on the main component composition of the dielectric layer or the main component composition of the internal electrode layer. For example, the firing may be performed at a temperature of about 1100°C to about 1400°C, for example, at a temperature of about 1200°C to about 1350°C. Additionally, the firing may be performed for about 0.5 hour to about 8 hours, for example, about 1 hour to about 3 hours. Additionally, the firing may be performed in a reducing atmosphere, for example, in a humidified mixed gas of nitrogen and hydrogen. Additionally, the firing may be performed under oxygen partial pressure conditions of 10⁻¹² atm to 10⁻⁸ atm. When firing is performed under oxygen partial pressure conditions within the above range, a multilayer ceramic capacitor having high interfacial resistance between the dielectric layer and the internal electrode layer and excellent reliability can be obtained.

After firing, annealing may be performed as needed. The annealing is a treatment to re-oxidize the dielectric layer, and annealing may be performed if firing is performed in a reducing atmosphere. The conditions of the annealing treatment may also be appropriately adjusted depending on the components of the dielectric layer. For example, the annealing temperature may be about 950 °C to about 1150 °C, the time may be about 0 to about 20 hours, and the rate of temperature rise may be about 50 °C/hour to about 500 °C/hour. The annealing atmosphere may be a humidified nitrogen gas (N₂) atmosphere, and an oxygen partial pressure may be about 1.0X10⁻⁹ MPa to about 1.0X10⁻⁵ MPa.

In binder removal treatment, firing treatment, or annealing treatment, for example, a wetter may be used to humidify nitrogen gas or mixed gas. In this case, the water temperature may be about 5 °C to about 75 °C. The binder removal treatment, firing treatment, and annealing treatment may be performed sequentially or independently.

Optionally, surface treatment such as sand blasting, laser irradiation, barrel polishing, etc. may be performed on the third and fourth surfaces of the prepared capacitor body 110. By performing this surface treatment, the ends of the first internal electrode layer and the second internal electrode layer may be exposed to the outermost surfaces of the third and fourth surfaces, and thus the electrical connection between the first external electrode layer and the second external electrode layer, and the first internal electrode and the second internal electrode may be improved, alloy portions may be easily formed.

Subsequently, the external electrode is formed on a surface of the manufactured capacitor body 110.

As an example, a paste for forming the sintered metal layer may be applied to the external electrode and then sintered to form the sintered metal layer.

The paste for forming the sintered metal layer may include a conductive metal including Cu, and glass. Since the description of the conductive metal and glass is the same as described above, repetitive description will be omitted. Additionally, the paste for forming the sintered metal layer may optionally include a binder, solvent, dispersant, plasticizer, oxide powder, and the like. The binder may be, for example, ethylcellulose, acrylic, butyral, etc., and the solvent may be, for example, an organic solvent or aqueous solvent such as terpineol, butylcarbitol, alcohol, methyl ethyl ketone, acetone, toluene, and the like.

Methods for applying the paste for forming the sintered metal layer on the outer surface of the capacitor body 110 may include various printing methods such as dip method and screen printing, application method using a dispenser, etc., and spraying method using spray. The paste for forming the sintered metal layer may be applied to at least the third and fourth surfaces of the capacitor body 110, and optionally applied to a part of the first, second, fifth, or the sixth surfaces on which the band portions of the first and second external electrodes are formed.

Thereafter, the capacitor body 110 applied with the paste for forming the sintered metal layer is dried, and sintered at a temperature of about 400°C to about 1000°C, for example, at a temperature of about 400°C to about 850°C, for about 0.1 hour to about 3 hours, to form the sintered metal layer.

Optionally, a paste for forming the conductive resin layer is applied on an outer surface of the obtained capacitor body 110 and then cured, to form the conductive resin layer.

The paste for forming the conductive resin layer may include a resin and, optionally, a conductive metal or a non-conductive filler. Since the description of the conductive metal and resin is the same as described above, repetitive description will be omitted. Additionally, the paste for forming the conductive resin layer may optionally include a binder, a solvent, a dispersant, a plasticizer, an oxide powder, and the like. The binder may include, for example, ethylcellulose, acrylic, butyral, etc., and the solvent may include an organic solvent or aqueous solvent such as terpineol, butylcarbitol, alcohol, methyl ethyl ketone, acetone, and toluene.

For example, the conductive resin layer may be formed by dipping the capacitor body 110 in the paste for forming the conductive resin layer and then curing it, or by printing the paste for forming the conductive resin layer on the surface of the capacitor body 110 by a screen-printing method or a gravure printing method, or by applying the paste for forming the conductive resin layer to the surface of the capacitor body 110 and then curing it.

Next, a plating layer is formed on the outside of the conductive resin layer.

For example, the plating layer can be formed by a plating method such as electroplating or a deposition method such as sputtering.

Hereinafter, the embodiments are illustrated in more detail with reference to examples. However, these examples are exemplary, and the scope of claims is not limited thereto.

### (Manufacturing of Multilayer Ceramic Capacitors)

### Examples 1 to 7 and Comparative Example 1

A conductive paste was prepared by mixing Ni and GeO₂. At this time, GeO₂ was mixed in an amount in which Ge corresponded to the parts by weight shown in Table 1 below based on 100 parts by weight of Ni.

Next, a dielectric slurry was prepared using barium titanate (BaTiO₃) powder. At this time, the dielectric slurry was prepared by mechanical milling after adding ethanol and toluene, a dispersant, and a binder together using zirconia balls (ZrO₂ balls) as a dispersion medium.

The prepared dielectric slurry was used by using a head discharge type on-roll forming coater to manufacture a dielectric green sheet. The prepared conductive paste was printed on the surface of the dielectric green sheet to form a conductive paste layer. The dielectric green sheets on which the conductive paste layers were formed were stacked and pressed to manufacture a dielectric green sheet stack. A capacitor body was manufactured by calcining the dielectric green sheet stack at 400°C or lower in a nitrogen atmosphere and then firing at 1300°C or lower and a H₂ concentration of 1.0 volume% or less.

Next, a paste including Cu and glass was applied to a surface of the capacitor body, and then sintered at a temperature of 400°C to 850°C to form an external electrode.

Next, a multilayer ceramic capacitor was manufactured through processes such as plating.

**(Table 1)**

| | Ge (parts by weight) |
|---|---|
| Example 1 | 0.3 |
| Example 2 | 0.72 |
| Example 3 | 1.5 |
| Example 4 | 1.88 |
| Example 5 | 3.73 |
| Example 6 | 5.11 |
| Example 7 | 8.17 |
| Comparative Example 1 | 0 |

### Evaluation 1: TEM-EDS Analysis of End region of Internal electrode layer

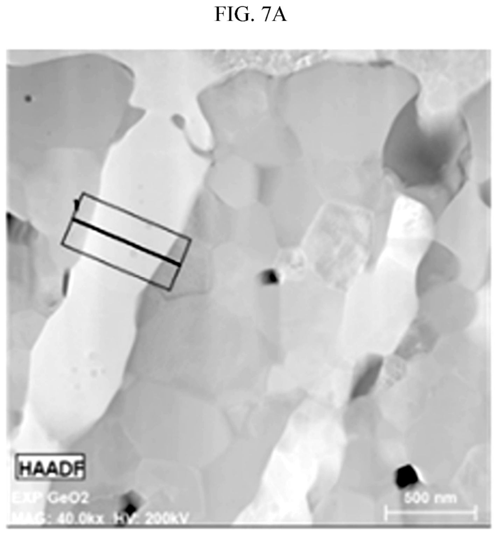

Transmission electron microscopy-energy dispersive spectroscopy (TEM-EDS) analysis was performed on each manufactured multilayer ceramic capacitor using the following method, and the results are shown in FIGS. 7A to 8C and Table 2 below.

Specifically, after placing the multilayer ceramic capacitor manufactured according to Example 3 and Comparative Example 1 horizontally, the periphery of the multilayer ceramic capacitor was fixed with epoxy resin, and polished with a polisher to obtain a cross-sectional sample having an LT surface so that the capacitor body and external electrode were observed. Next, when the cross-sectional sample was divided into three parts, an upper region, a central region, and a lower region, in the stacking direction, each region was measured using a transmission electron microscope (TEM) to ensure that the external electrode and at least one internal electrode layer connected to the external electrode were visible. TEM was measured under conditions of acceleration voltage of 200 kV and magnification of 40k using Xe-Focused Ion Beam (FIB) for each region. Next, energy dispersive spectroscopy (EDS) analysis was performed on the end region of the internal electrode layer connected to the external electrode in each TEM image.

Specifically, a straight line section was designated in the stacking direction, i.e., in the direction perpendicular to the direction of the internal electrode layer, based on a point having a length of about 1 µm from the interface between the external electrode and the internal electrode layer in each TEM image, and EDS line analysis was performed on the straight line section, and the results are shown in FIGS. 7A to 8C. At this time, the interface between the external electrode and the internal electrode layer was positioned on a straight line with one end of the two upper and lower dielectric layers adjacent to the internal electrode layer in the stacking direction in the TEM image. Specifically, one end of the two dielectric layers corresponded to a straight line passing through the average point of the highest point and the lowest point among the ends of the two dielectric layers in the stacking direction.

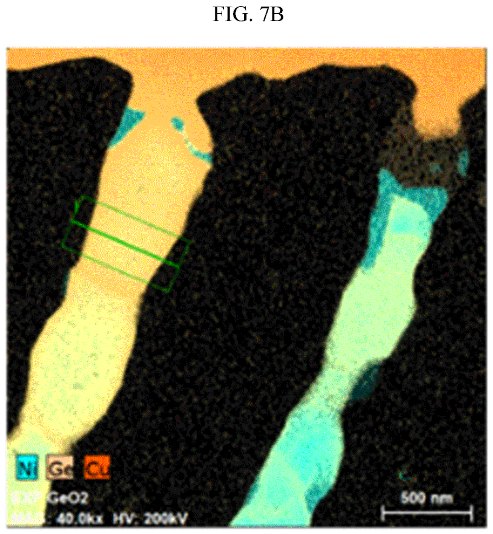

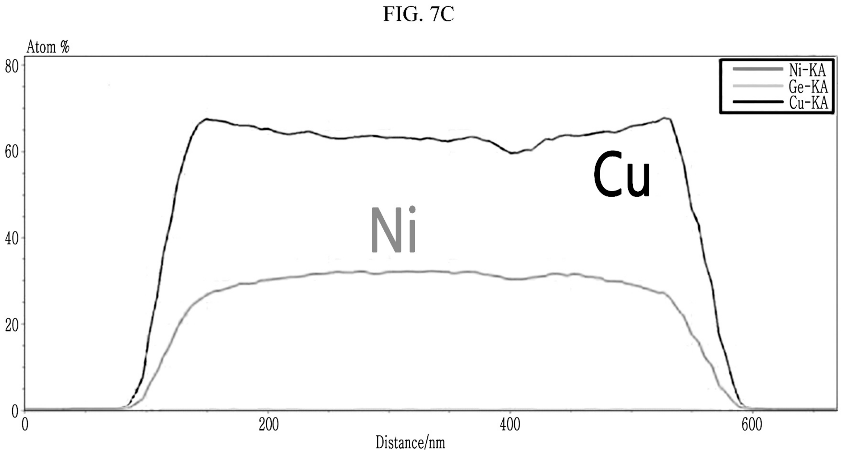

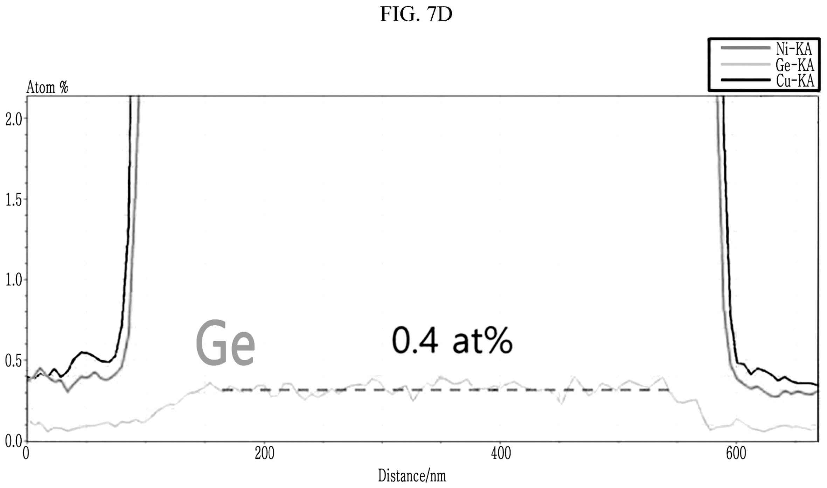

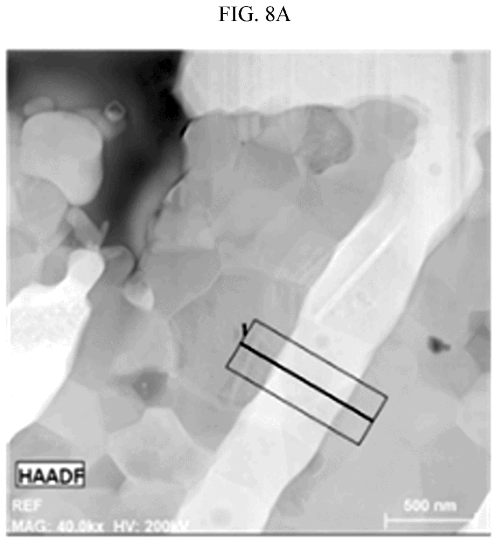

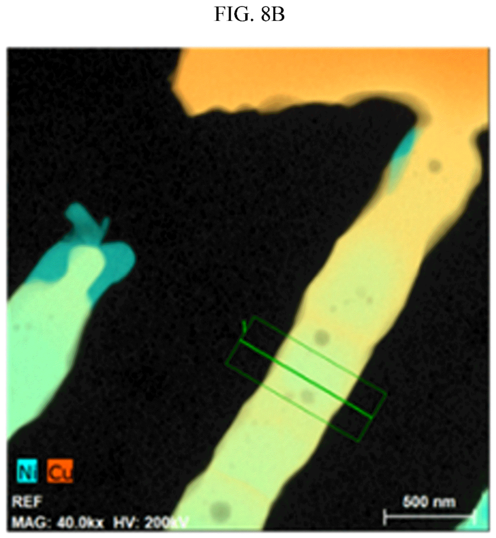

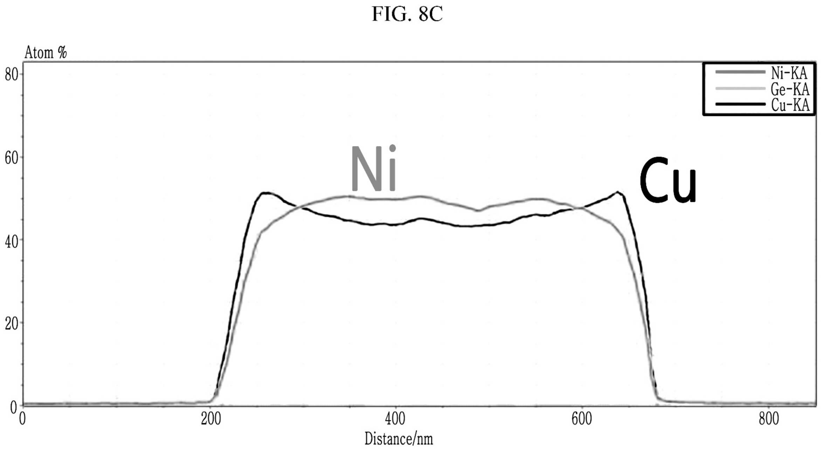

FIG. 7A and FIG. 7B are transmission electron microscope-energy dispersive spectroscopy (TEM-EDS) analysis images of the end region of the internal electrode layer according to Example 3, FIG. 7C is a transmission electron microscope-energy dispersive spectroscopy (TEM-EDS) line analysis graph for the end region of the internal electrode layer according to Example 3, and FIG. 7D is an enlarged view of a portion of FIG. 7C. In addition, FIG. 8A and FIG. 8B are transmission electron microscope-energy dispersive spectroscopy (TEM-EDS) analysis images of the end region of the internal electrode layer according to Comparative Example 1, and FIG. 8C is a transmission electron microscope-energy dispersive spectroscopy (TEM-EDS) line analysis graph for the end region of the internal electrode layer according to Comparative Example 1.

Referring to FIGS. 7A to 7D, it can be confirmed that in Example 3, Ni, Cu, and Ge existed within the end region of the internal electrode layer connected to the external electrode. On the other hand, referring to FIGS. 8A to 8C, it can be confirmed that in the case of Comparative Example 1, Ni and Cu existed within the end region of the internal electrode layer connected to the external electrode, but Ge did not exist. Additionally, in the case of Example 3, where Ge was added to the internal electrode layer and Ge was included in the end region of the internal electrode layer, it can be seen that the degree of Cu diffusion was greater compared to Comparative Example 1.

In addition, in each TEM image obtained above, arbitrary points were designated at 1 µm intervals from a point having a length of 1 µm to a point having a length of 10 µm from the interface between the external electrode and the internal electrode layer, and EDS analysis was performed to measure the content of each element at those points. The results are shown in Table 2 below.

The content of each element according to the length shown in Table 2 below was expressed as the average value of the content of each element at points within the end regions of each of the three internal electrode layers in each of the upper region, central region, and lower region of the cross-sectional sample, i.e., at points within a total of nine end regions.

In addition, in Table 2 below, the content of each element was expressed in mole % based on the sum of the Ni, Cu, and Ge contents in Example 3, and in mole % based on the sum of the Ni and Cu contents in Comparative Example 1.

**(Table 2)**

| Length from interface between external electrode and internal electrode layer (µm) | Comparative Example 1 | | Example 3 | | |
|---|---|---|---|---|---|
| | Ni (mol%) | Cu (mol%) | Ni (mol%) | Cu (mol%) | Ge (mol%) |
| 1 | 72.1 | 27.9 | 47.4 | 52.4 | 0.2 |
| 2 | 74.7 | 25.3 | 62.9 | 36.8 | 0.3 |
| 3 | 83.3 | 16.7 | 69.7 | 29.9 | 0.4 |
| 4 | 85.3 | 14.7 | 70.1 | 29.5 | 0.4 |
| 5 | 86.6 | 13.4 | 73.8 | 25.7 | 0.5 |
| 6 | 88.5 | 11.5 | 83.4 | 16.1 | 0.5 |
| 7 | 94.2 | 5.8 | 84.6 | 14.8 | 0.6 |
| 8 | 91.4 | 8.6 | 89.9 | 9.6 | 0.5 |
| 9 | 92.2 | 7.8 | 90.1 | 9.4 | 0.5 |
| 10 | 95.8 | 4.2 | 94.7 | 4.8 | 0.5 |

Through the above Table 2, it can be seen that in the case of Example 3, the end region of the internal electrode layer connected to the external electrode included Ni, Cu, and Ge, whereas in the case of Comparative Example 1, the end region did not include Ge.

Additionally, in the case of Example 3, where Ge was added to the internal electrode layer and Ge was included in the end region of the internal electrode layer, it can be seen that the molar ratio of Cu to Ni was greater compared to Comparative Example 1.

### Evaluation 2: TEM-EDS Analysis of Internal electrode layer

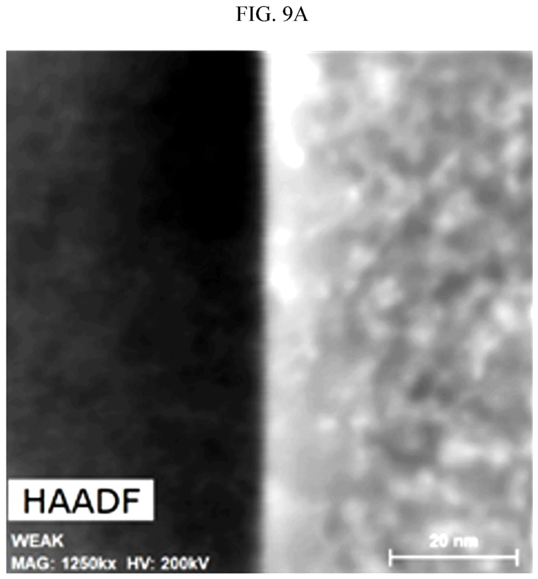

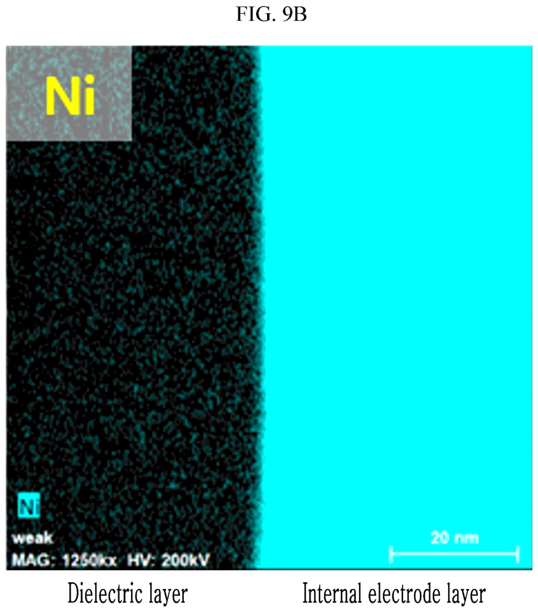

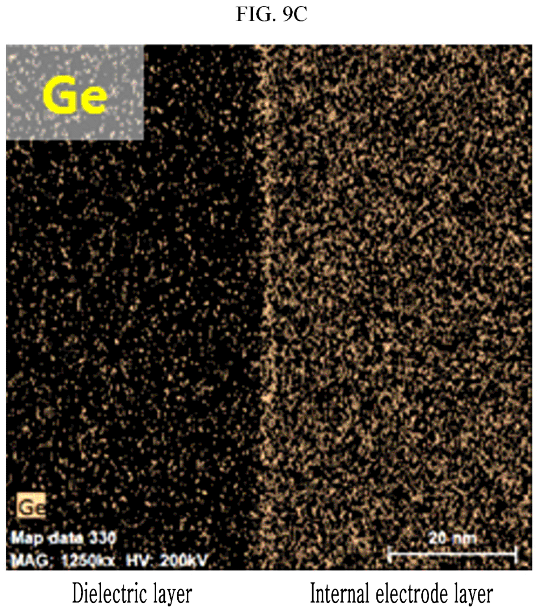

Transmission electron microscopy-energy dispersive spectroscopy (TEM-EDS) analysis was performed on each manufactured multilayer ceramic capacitor, and the results are shown in FIGS. 9A to 11B and Table 3 below.

After placing the manufactured multilayer ceramic capacitor in an epoxy mixing solution and curing it, the W-axis and T-axis direction surfaces (WT surfaces) of the capacitor body were polished to a depth of 1/2 in the L-axis direction. After polishing, the polished surface was processed by ion milling, fixed, and maintained in a vacuum atmosphere chamber to obtain a cross-sectional sample so that the active region where the dielectric layer and the internal electrode layer intersect was observed. Next, when the active region of the cross-sectional sample was divided into three parts, an upper region, a central region, and a lower region in the stacking direction, it was measured using a transmission electron microscope (TEM) so that at least one dielectric layer and at least one internal electrode layer were visible in each region. TEM was measured under conditions of an acceleration voltage of 200 kV and a magnification of 40 k using a Xe-Focused Ion Beam (FIB). Next, energy dispersive spectroscopy (EDS) analysis was performed on each measured TEM image of the cross-sectional sample.

FIG. 9A to FIG. 9C are transmission electron microscope-energy dispersive spectroscopy (TEM-EDS) analysis images of the internal electrode layer according to Example 3.

Referring to FIGS. 9A to 9C, it can be seen that the internal electrode layer according to Example 3 includes Ni and Ge, and also that the average content of Ge was higher at the interface with the dielectric layer than in the inner region. In other words, it can be seen that the average content of Ge in the interface region, which is the region including the interface with the dielectric layer, that is, the region having a length of about 2 nm from the interface between the internal electrode layer and the dielectric layer to the inside of the internal electrode layer, was greater than the average content of Ge in the remaining region, that is, the inner region.

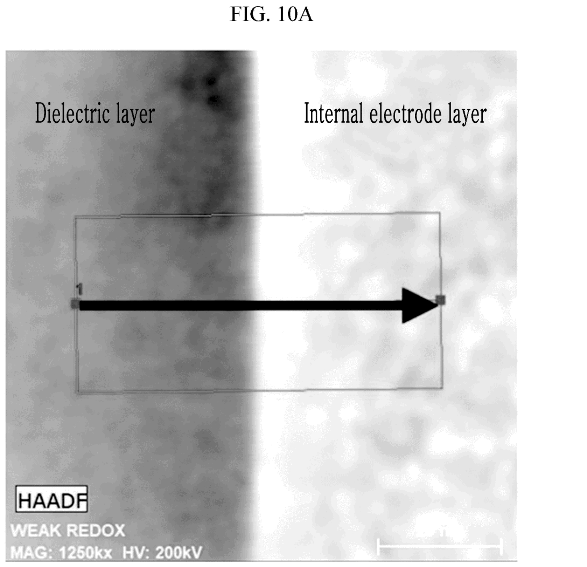

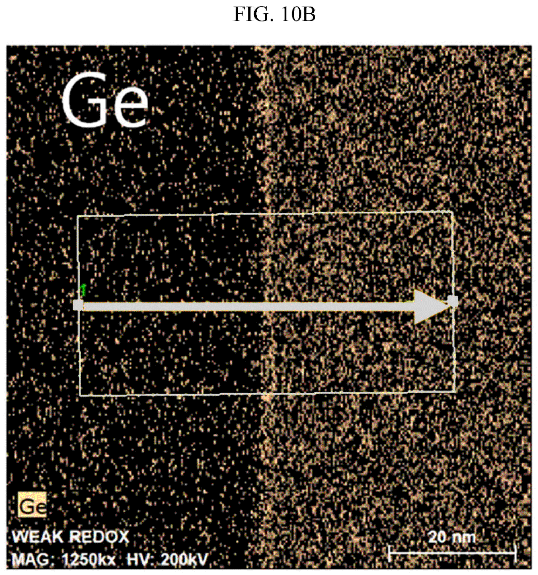

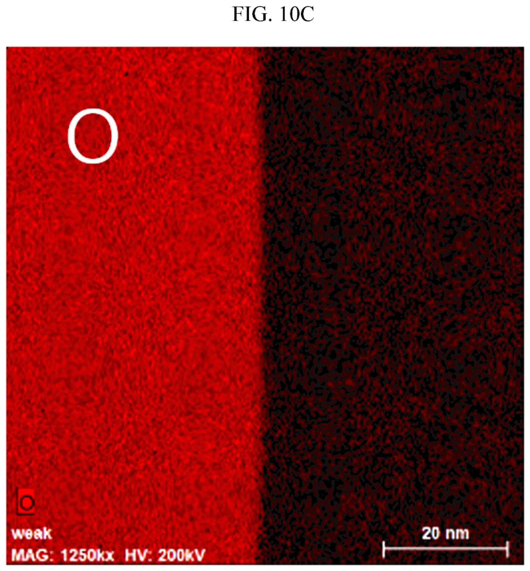

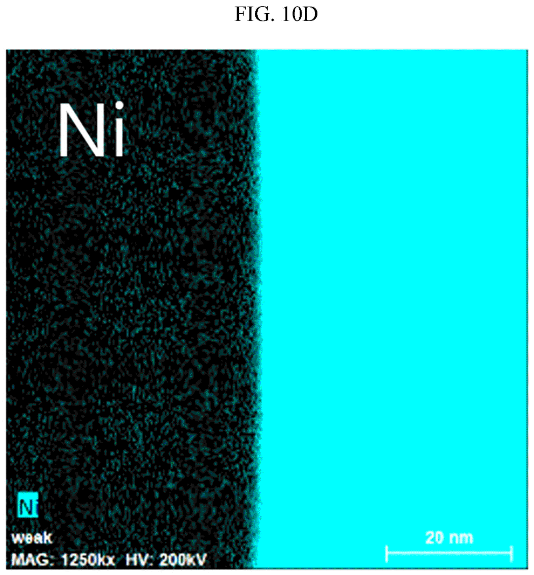

Additionally, in the TEM image of the measured cross-sectional sample, energy dispersive spectroscopy (EDS) line analysis was performed on a straight line section from a point in an arbitrary internal electrode layer to a point in a dielectric layer adjacent to the internal electrode layer, and the results are shown in FIGS. 10A to 11B.

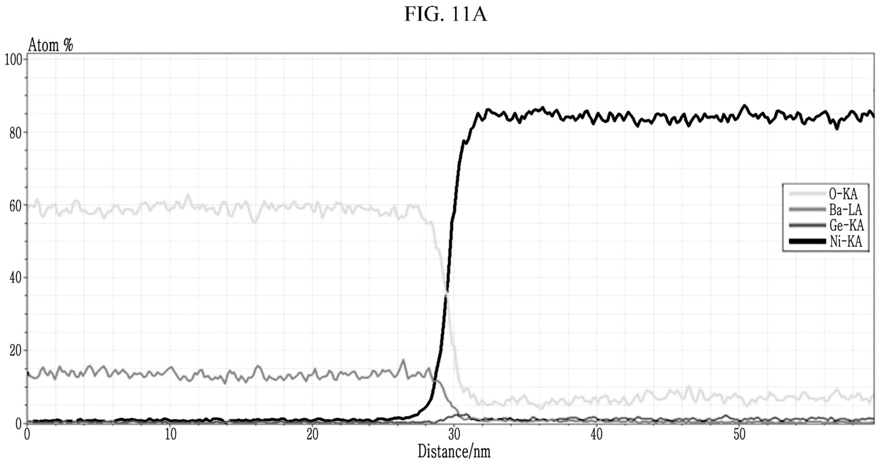

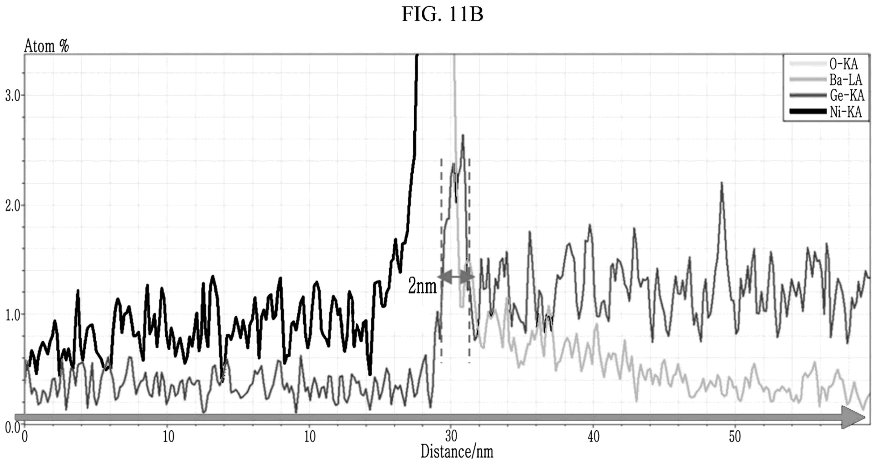

FIG. 10A to FIG. 10D are transmission electron microscope-energy dispersive spectroscopy (TEM-EDS) mapping analysis images of the internal electrode layer according to Example 3. FIG. 11A is a transmission electron microscope-energy dispersive spectroscopy (TEM-EDS) line analysis graph for the straight section of FIG. 10A, and FIG. 11B is an enlarged view of a portion of FIG. 11A.

Referring to FIGS. 10A to 11B, it can be seen that in the case of the internal electrode layer of Example 3, the mol% of Ge had a maximum value in the interface region. At this time, it can be seen that the interface between the dielectric layer and the internal electrode layer is a point at about 1/3 of the maximum mol% of Ni, and the interface region is a region from a point at about 1/3 of the maximum mol% of Ni to a distance of 2 nm inside the internal electrode layer. Additionally, in the case of the internal electrode layer of Example 3, it can be seen that the average content of Ge in the interface region was greater than the average content of Ge in the inner region, which is the remaining region.

In addition, the Ge content in the internal electrode layer was measured by the following method, and the results are shown in Table 3 below.

In the TEM images of the upper region, central region, and lower region of the active region obtained above, two internal electrode layers were selected for each region, and five equally spaced points were designated in each internal electrode layer, and the Ge content at the corresponding points was measured through EDS analysis, and the average value of the Ge content at a total of 30 points was obtained. In Table 3 below, the Ge content was expressed based on 100 parts by mole of Ni.

**(Table 3)**

| | Ge content in internal electrode layer (parts by mole) |
|---|---|
| Example 1 | 0.05 |
| Example 2 | 0.42 |
| Example 3 | 1.11 |
| Example 4 | 1.48 |
| Example 5 | 1.94 |
| Example 6 | 2.22 |
| Example 7 | 3.57 |
| Comparative Example 1 | 0 |

Through the above Table 3, it can be confirmed that, in Examples 1 to 7, the Ge content in the internal electrode layer was detected to be within a range of about 0.01 part by mole to about 4 parts by mole based on 100 parts by mole of Ni.

### Evaluation 3: Reliability

The high-temperature reliability and moisture resistance reliability of the multilayer ceramic capacitors manufactured in Examples 1 to 7 and Comparative Example 1 were evaluated by the following methods, and the results are shown in Table 4 below.

Specifically, 40 of each of the multilayer ceramic capacitors manufactured in Examples 1 to 7 and Comparative Example 1 were prepared and mounted on a measurement substrate. High-temperature reliability was measured using ESPEC (PV-222, HALT) equipment under conditions of 125°C, 9.45V, and 48 hours to obtain the mean time to failure (MTTF). Moisture resistance reliability was measured by measuring insulation resistance (IR) using ESPEC (PR-3J, 8585) equipment under the conditions of 85°C, 85% relative humidity (R.H.), 7.56 V, and 24 hours.

In Table 4 below, MTTF was expressed as a ratio based on the result value of Comparative Example 1. Moisture resistance reliability was judged as NG when the insulation resistance (IR) value was 10⁴ Ω or less, and OK when the insulation resistance (IR) value was more than 10⁴ Ω.

**(Table 4)**

| | High-temperature reliability (MTTF) | Moisture resistance reliability |
|---|---|---|
| Example 1 | 1.66 | OK |
| Example 2 | 1.83 | OK |
| Example 3 | 2.12 | OK |
| Example 4 | 2.27 | OK |
| Example 5 | 1.96 | OK |
| Example 6 | 1.77 | OK |
| Example 7 | 1.24 | OK |
| Comparative Example 1 | 1 | NG |

Referring to Table 4 above, it can be seen that both high-temperature reliability and moisture resistance reliability were superior in Examples 1 to 7 compared to Comparative Example 1. From this, it can be seen that when Ni and Ge were included in the internal electrode layer, as well as Ni, Cu, and Ge were included in the end region of the internal electrode layer, according to an embodiment, the corrosion resistance was improved through the improvement in the degree of Cu penetration, and thus the high-temperature reliability and moisture resistance reliability were improved.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

## Claims

1. A multilayer ceramic capacitor, comprising
a capacitor body including:
a plurality of dielectric layers; and
a plurality of internal electrode layers stacked with at least one of the dielectric layers interposed therebetween; and
an external electrode disposed on an outer surface of the capacitor body and connected to at least one of the internal electrode layers,
wherein the at least one of the internal electrode layers comprises nickel, Ni, and germanium, Ge,
wherein the at least one of the internal electrode layers connected to the external electrode has an end region defined as a region extending from an interface between the at least one of the internal electrode layers and the external electrode to a length of 15 µm in a direction away from the interface and toward an interior of the at least one of the internal electrode layers, and
wherein the end region, the external electrode, or both of the end region and the external electrode comprise nickel, Ni, copper, Cu, and germanium, Ge.

2. The multilayer ceramic capacitor of claim 1, wherein the end region comprises nickel, Ni, copper, Cu, and germanium, Ge.

3. The multilayer ceramic capacitor of claim 1, wherein the end region, the external electrode, or both of the end region and the external electrode comprise germanium, Ge, in an amount of 0.01 part by mole to 4 parts by mole based on 100 parts by mole of nickel, Ni, or
wherein the end region, the external electrode, or both of the end region and the external electrode comprise germanium, Ge, in an amount of 0.1 part by mole to 1 part by mole based on 100 parts by mole of nickel, Ni.

4. The multilayer ceramic capacitor of claim 2, wherein the end region comprises germanium, Ge, in an amount of 0.01 part by mole to 4 parts by mole based on 100 parts by mole of nickel, Ni, or
wherein the end region comprises germanium, Ge, in an amount of 0.1 part by mole to 1 part by mole based on 100 parts by mole of nickel, Ni.

5. The multilayer ceramic capacitor of one of claims 1 to 4, wherein the interface between the internal electrode layer and the external electrode is positioned on a straight line passing through an end of the at least one of the dielectric layers in a stacking direction.

6. The multilayer ceramic capacitor of claim 2, wherein a molar ratio of Cu to Ni in the end region is 0.01 to 3.

7. The multilayer ceramic capacitor of one of claims 1 to 6, wherein Ni, Cu, and Ge included in the end region, the external electrode, or both of the end region and the external electrode are in a form of Ni-Cu-Ge alloy.

8. The multilayer ceramic capacitor of one of claims 1 to 7, wherein the internal electrode layer comprises germanium, Ge, in an amount of 0.01 part by mole to 4 parts by mole based on 100 parts by mole of nickel, Ni.

9. The multilayer ceramic capacitor of one of claims 1 to 7, wherein the at least one of the internal electrode layers comprises:
an inner region and
an interface region disposed on at least one surface of the inner region in a stacking direction, the interface region includes an interface with the dielectric layer, and
wherein the inner region and the interface region comprise nickel, Ni, and germanium, Ge.

10. The multilayer ceramic capacitor of claim 9, wherein an average content of germanium, Ge, in the interface region is higher than the average content of germanium, Ge, in the inner region, or
wherein an average content of germanium, Ge, in the interface region is 0.4 part by mole to 12 parts by mole based on 100 parts by mole of nickel, Ni, in the interface region, or
wherein an average content of germanium, Ge, in the inner region is 0.2 part by mole to 10 parts by mole based on 100 parts by mole of nickel, Ni, in the inner region.

11. The multilayer ceramic capacitor of claim 9, wherein an average molar ratio of an amount of germanium, Ge, in the interface region relative to an amount of germanium, Ge, in the inner region is greater than 1 and less than or equal to 5.

12. The multilayer ceramic capacitor of claim 9, wherein the interface region is a region having a length of 2 nm from the interface of the internal electrode layer and the dielectric layer to an inside of the internal electrode layer.

13. The multilayer ceramic capacitor of claim 9, wherein the interface region further comprises germanium oxide, GeO₂.

14. A method of manufacturing a multilayer ceramic capacitor, comprising
preparing a conductive paste by mixing nickel, Ni, and a germanium, Ge,-based raw material;
manufacturing a plurality of dielectric green sheets from a dielectric slurry, and forming a conductive paste layer by applying the conductive paste on a surface of each of at least two dielectric green sheets among the plurality of dielectric green sheet;
manufacturing a dielectric green sheet stack by stacking the at least two dielectric green sheets on which the conductive paste layer is formed;
manufacturing a capacitor body including a dielectric layer and an internal electrode layer by firing the dielectric green sheet stack; and
forming an external electrode connected to the internal electrode layer on an outer surface of the capacitor body,
wherein the internal electrode layer comprises nickel, Ni, and germanium, Ge,
the internal electrode layer connected to the external electrode has an end region defined as a region extending from an interface between the internal electrode layer and the external electrode to a length of 15 µm in a direction away from the interface and toward an interior of the internal electrode layer, and
the end region, the external electrode, or both of the end region and the external electrode comprise nickel, Ni, copper, Cu, and germanium, Ge.

15. The method of claim 14, wherein the germanium, Ge,-based raw material comprises at least one selected from the group consisting of germanium, Ge, germanium oxide, GeO₂, and Ni-Ge alloy, or
wherein the germanium, Ge,-based raw material is mixed in an amount of 0.1 part by weight to 10 parts by weight of germanium, Ge, based on 100 parts by weight of nickel, Ni.
